# EUROPÄISCHE PATENTSCHRIFT

(11) **EP 1 710 104 B1**
(45) Veröffentlichungstag und Bekanntmachung des Hinweises auf die Patenterteilung: **04.11.2009**
(21) Anmeldenummer: 06007291.5
(22) Anmeldetag: 06.04.2006
(51) Int. Cl.: B60J 1/00, B32B 17/10

(54) **Kraftfahrzeug und Verbundglasscheibe dafür**
Vehicle and laminated glass for vehicle
Véhicule et vitrage feuilleté pour véhicule

(30) Priorität: 08.04.2005 DE 102005016087
(43) Veröffentlichungstag der Anmeldung: 11.10.2006
(73) Patentinhaber: GM Global Technology Operations, Inc., Detroit, MI 48265-3000 (US)
(72) Erfinder: Hallik, Matthias, 65207 Wiesbaden (DE)
(74) Vertreter: Daniel, Ulrich W.P.

(56) Entgegenhaltungen:
- DE-A1- 3 937 605
- DE-U1- 9 016 664
- DE-U1- 20 308 376
- US-A- 4 827 198
- US-A- 6 094 981

## Beschreibung

Die vorliegende Erfindung betrifft eine Verbundglasscheibe wie etwa eine Front- oder Heckscheibe für ein Kraftfahrzeug sowie ein Kraftfahrzeug, das mit einer solchen Scheibe ausgestattet ist.

Mit elektrischen Leitern versehene Verbundglasscheiben sind insbesondere als beheizbare Heckscheiben für Kraftfahrzeuge allgemein bekannt und verbreitet. Meist sind die Heizleiter derartiger Scheiben an der Innenseite der Scheiben angebracht.

Aus DE 100 18 276 A1 ist eine Verbundscheibe bekannt, bei der elektrisch leitfähige Drähte in eine thermoplastische Klebeschicht eingebettet sind, durch die zwei Glasschichten der Verbundscheibe miteinander verbunden sind. Die Drähte können als Scheibenheizung oder als eine Antenne dienen. Anschlüsse der Drähte sind an den Seitenrändern der Verbundscheibe, zwischen den zwei Glasschichten, herausgeführt.

US 9 094 981 beschreibt eine als Verbundscheibe aufgebaute Windschutzscheibe, in die ein kapazitiver Regensensor eingebettet ist. Anschlüsse des Regensensors sind in randoffenen Aussparungen einer Glasschicht der Verbundscheibe zugänglich.

DE 203 08 376 U1 offenbart eine Verbundglasscheibe nach dem Oberbegriff des Anspruchs 1.

Elektrische Verbraucher, die im Kopfbereich der Fahrgastzelle eines Kraftfahrzeugs montiert sein können, wie etwa eine Innenraumbeleuchtung, sind im Allgemeinen am Fahrzeugdach montiert, da es keine Schwierigkeiten bereitet, elektrische Versorgungskabel für diese Verbraucher zwischen der Außenhaut und einer Innenverkleidung des Dachs zu verlegen. Bei Kraftfahrzeugkarosserien, bei denen sich eine Windschutzscheibe oder Heckscheibe bis in den Dachbereich der Fahrgastzelle erstreckt, wie etwa in DE 102 45 245 A1 und DE 198 52 184 A1 beschrieben, ist die Montage derartiger Verbraucher schwierig, da es nicht möglich ist, die Versorgungsleitungen eines solchen Verbrauchers auf ihrer ganzen Länge verdeckt zu führen. Zwar ist bei der Kraftfahrzeugkarosserie gemäß DE 198 52 184 A1 zwischen den verlängerten Front- und Heckscheiben noch ein schmaler die B-Säulen verbindender Spriegel zu erkennen, doch ist dieser kein günstiger Ort, um z. B. eine Innenraumbeleuchtung zu montieren, da es von dort aus nur schwerlich möglich ist, eine Landkarte, die ein Fahrer oder Beifahrer auf dem Schoß hält, vollständig zu beleuchten.

Aufgabe der vorliegenden Erfindung ist daher, eine Verbundglasscheibe für ein Kraftfahrzeug zu schaffen, die die Beschränkungen herkömmlicher Verbundglasscheiben, was die Anbringung elektrischer Verbraucher in der Fahrgastzelle angeht, überwindet.

Die Aufgabe wird erfindungsgemäß dadurch gelöst, dass bei einer Verbundglasscheibe für ein Kraftfahrzeug mit wenigstens zwei Glasschichten und einer zwischen den Glasschichten angeordneten wenigstens in Teilbereichen elektrisch leitfähigen Zwischenschicht eine der Glasschichten eine Durchgangsöffnung aufweist, durch die wenigstens einer der Teilbereiche kontaktierbar ist, so dass es möglich ist, einen in der Nähe der Durchgangsöffnung angebrachten Verbraucher durch die Durchgangsöffnung hindurch mit Strom zu versorgen. Das Gehäuse eines solchen Verbrauchers ist die Durchgangsöffnung überdeckend an der durchbrochenen Glasschicht angebracht, so dass zum einen die Öffnung für einen Benutzer unsichtbar bleibt und zum anderen die Zwischenschicht und ihre leitfähigen Bereiche vor Beschädigung geschützt sind.

Bei den elektrisch leitfähigen Teilbereichen der Zwischenschicht handelt es sich vorzugsweise um metallische Drähte, die in eine Polymerschicht als Zwischenschicht eingebettet sind. Je nach Leistungsaufnahme des Verbrauchers kommen eventuell auch andere Typen von leitfähigen Teilbereichen in Betracht, wie etwa eine aufgedampfte dünne Schicht aus Metall oder einem transparenten elektrisch leitfähigen Material, ein beispielsweise im Siebdruck strukturiert aufgetragenes, durch Zusatz von Metallpulver elektrisch leitfähig gemachtes Polymermaterial, etc.

Um die elektrisch leitfähigen Teilbereiche, sofern sie nicht transparent sind, zu kaschieren, kann die Verbundglasscheibe lokal opak gemacht sein, und die leitfähigen Teilbereiche erstrecken sich zumindest überwiegend in dem opaken Bereich der Scheibe.

Wenn die Verbundglasscheibe eine Kraftfahrzeug-Frontscheibe ist, ist die Durchgangsöffnung vorzugsweise in einem in Einbaulage der Scheibe oberen mittleren Bereich derselben angeordnet. Eine solche Platzierung ist beispielsweise gut geeignet für die Stromversorgung einer Innenraumbeleuchtung, eines elektrochromen Rückspiegels, von Stellmotoren eines motorisiert verstellbaren Rückspiegels, etc.

Vorzugsweise sind benachbart zu der Durchgangsöffnung Kontaktfelder an einer Außenseite der durchbrochenen Glasschicht angeordnet und mit einem der Teilbereiche über ein durch die Durchgangsöffnung geführten Leiter kontaktiert. Diese Kontaktfelder erleichtern die elektrische Kontaktierung eines Verbrauchers an der Scheibe.

Weitere Merkmale der Erfindung ergeben sich aus der nachfolgenden Beschreibung von Ausführungsbeispielen unter Bezugnahme auf die beigefügten Figuren.

Es zeigen:
- Fig. 1: eine perspektivische Ansicht eines Kraftfahrzeugs, das mit einer erfindungsgemäßen Scheibe ausgestattet ist,
- Fig. 2: einen ersten Teilschnitt durch die Verbundglasscheibe; und
- Fig. 3: einen zweiten Teilschnitt durch die Verbundglasscheibe.

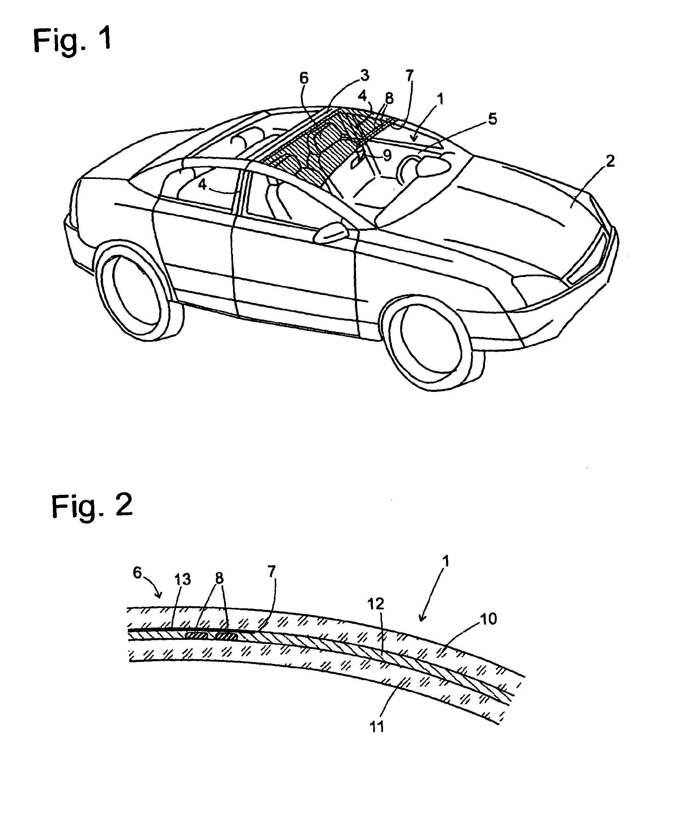

Fig. 1 ist eine perspektivische Ansicht eines Kraftfahrzeugs, an dem die vorliegende Erfindung verwirklicht ist. Das Fahrzeug hat eine Frontscheibe 1, die sich von der rückwärtigen Kante einer Motorhaube 2 aus bis zu einem Dachspriegel 3 erstreckt, der rechte und linke B-Säulen 4 der Karosserie etwa in Höhe der Rückenlehnen von Fahrer- und Beifahrersitz verbindet. Die Scheibe 1 ist entlang einer Grenzlinie 7 unterteilt in einen vorderen schrägen Abschnitt 5 und einen in etwa horizontalen Dachabschnitt 6. Der in der Figur transparent schraffierte horizontale Dachabschnitt 6 ist in der Praxis opak gemacht, um Metalldrähte 8 zu verbergen, die von einem Rand der Scheibe 1 her zu einem gelhalter 9 erstrecken, doch könnten die Drähte auch in anderer Zahl und von verschiedenen Seiten her zum Rückspiegelhalter 9 geführt sein.

Fig. 2 zeigt einen Schnitt durch die Frontscheibe 1 in einer in Fahrzeuglängsrichtung etwa mittig durch das Lenkrad verlaufenden vertikalen Ebene. Man erkennt den Aufbau der Glasscheibe 1 aus einer äußeren Glasschicht 10 und einer inneren Glasschicht 11 und einer dazwischen liegenden flexiblen Polymerschicht 12.

Der Dachabschnitt 6 ist opak gemacht durch eine Pigmentschicht 13, die im Siebdruck auf die Innenseite der äußeren Glasschicht 10 aufgetragen ist. Die Pigmentschicht 13 verdeckt die unmittelbar unter ihr in der Polymerschicht 12 verlaufenden metallischen Drähte 8. Die Drähte 8 sind hier mit einem abgeflachten Querschnitt dargestellt, um trotz geringen Abstands zwischen den Glasschichten 10, 11 einen Leitungsquerschnitt zu realisieren, der für den Leistungsbedarf eines am Spiegelhalter 9 angebrachten elektrischen Verbrauchers ausreicht.

Um die Leiter 8 auch vom Inneren der Fahrgastzelle her unsichtbar zu machen, kann eine zweite, mit der Schicht 13 kongruente Pigmentschicht oder auch lediglich eine streifenförmige Schicht an der der Polymerschicht 12 zugewandten Oberfläche der Glasschicht 11 angebracht sein.

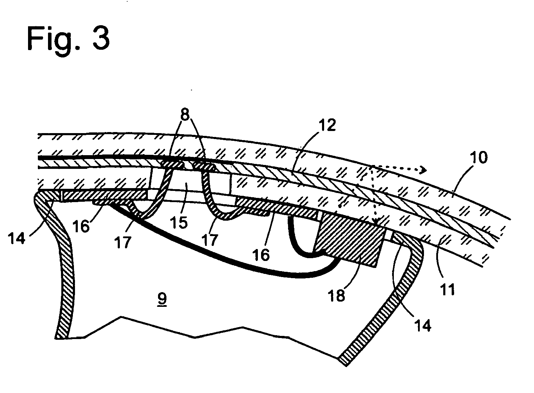

Fig. 3 zeigt einen zweiten Schnitt durch die Scheibe 1 in einer zur Schnittebene der Fig. 2 parallelen, durch den Spiegelträger 9 verlaufenden Ebene. Der nur teilweise dargestellte Spiegelträger 9 ist hohl und hat einen ringförmigen, gegen die freie Oberfläche der inneren Glasschicht 11 geklebten Flansch 14. In dem von dem Flansch 14 umgebenen Bereich der Glasschicht 11 befindet sich eine Durchgangsöffnung 15, in der die Polymerschicht 12 und die in ihr verlaufenden Leiterdrähte 8 freiliegen. Um die Durchgangsöffnung 15 herum sind an der Glasschicht 11 Kontaktfelder 16 angebracht, beispielsweise in Form von an die Glasschicht 11 angeklebten, oberflächlich metallisierten Leiterplatten. Bonddrähte 17 erstrecken sich zwischen jedem der Leiter 8 und dem ihm zugeordneten Kontaktfeld 16. Um einen an den Spiegelträgers montierten elektrischen Verbraucher zu kontaktieren, genügt es, Anschlussdrähte dieses Verbrauchers an die Kontaktfelder 16 anzulöten. Die Kontaktfelder könnten aber auch mit Steckverbindern bestückt sein, in die entsprechende Steckkontakte des Verbrauchers einschiebbar sind.

Als an die Kontaktfelder 16 anzuschließende Verbraucher kommen z. B. Steuerelektroden eines elektrochromen Rückspiegels in Betracht, die es erlauben, die Tönung des Rückspiegels einzustellen, um den Fahrer des Fahrzeugs vor Blendung durch den rückwärtigen Verkehr zu schützen. Da die Leistungsaufnahme eines solchen elektrochromen Spiegels gering ist, kämen zu seiner Stromversorgung anstelle der Drähte 8 auch an den Innenflächen der Glasschichten 10, 11 aufgebrachte Dünnschichten in Betracht.

Ein anderer möglicher Verbraucher ist ein Elektromotor zum Kippen des Rückspiegels, der beispielsweise von einer entfernten Steuereinheit betätigt wird, um eine vorgegebene Orientierung des Rückspiegels einzustellen, wenn sich ein Benutzer bei dem Steuergerät als Fahrer des Fahrzeugs anmeldet, der zuvor diese Spiegelstellung als seine bevorzugte Stellung in das Steuergerät einprogrammiert hat.

Ein weiterer Verbraucher, der zur Montage an dem Spiegelträger 9 in Betracht kommt, ist ein Infrarotsensor oder ein anderer Typ von zum Erfassen von Personen in der Fahrgastzelle geeigneter Sensor, der es erlaubt, das Eindringen einer unbefugten Person in den Fahrgastraum zu erfassen und eine Alarmanlage auszulösen.

Auch eine Innenraumbeleuchtung kann nach Wunsch in den Spiegelhalter integriert oder in dessen Nähe angeordnet und über die von dem Spiegelhalter verdeckte Durchgangsöffnung 15 mit elektrischen Strom versorgt sein.

In Fig. 3 ist als Beispiel für einen Verbraucher schematisch ein Regensensor 18 dargestellt. Dieser ist innerhalb des hohlen Spiegelträgers 9 an die Scheibe 1 geklebt und umfasst z. B. eine Lichtquelle wie etwa eine Leuchtdiode, die Licht unter einem großen Einfallswinkel in die Scheibe einspeist, und einen Photodetektor, der die vom Vorhandensein von Feuchtigkeit abhängige Intensität des an der Außenseite der Scheibe 1 reflektierten Lichts erfasst.

Während die Fig. 2 und 3 jeweils nur zwei elektrische Leiter 8 zeigen, liegt auf der Hand, dass eine größere Zahl von Leitern 8 vorgesehen werden kann, wenn Anzahl und/oder Komplexität der verschiedenen über die Durchgangsöffnung 15 angeschlossenen Verbraucher dies erfordern. Selbstverständlich können mehreren Verbrauchern auch jeweils einzelne Durchgangsöffnungen zugeordnet sein.

### Bezugszeichenliste

- Frontscheibe: 1
- Motorhaube: 2
- Dachspriegel: 3
- B-Säule: 4
- Schräger Abschnitt: 5
- Dachabschnitt: 6
- Grenzlinie: 7
- Leiter: 8
- Spiegelhalter: 9
- Glasschicht: 10, 11
- Polymerschicht: 12
- Pigmentschicht: 13
- Flansch: 14
- Durchgangsöffnung: 15
- Kontaktfeld: 16
- Bonddraht: 17
- Verbraucher: 18

## Patentansprüche

1. Verbundglasscheibe (1) für ein Kraftfahrzeug mit wenigstens zwei Glasschichten (10, 11) und einer zwischen den Glasschichten angeordneten wenigstens in Teilbereichen (8) elektrisch leitfähigen Zwischenschicht (12), wobei eine der Glasschichten eine Durchgangsöffnung (15) aufweist, durch die wenigstens einer der Teilbereiche (8) kontaktierbar ist, **dadurch gekennzeichnet, dass** ein Gehäuse (9) eines durch die Durchgangsöffnung hindurch versorgten elektrischen Verbrauchers (18) die Durchgangsöffnung (15) überdeckend an der durchbrochenen Glasschicht (11) angebracht ist.

2. Verbundglasscheibe nach Anspruch 1, **dadurch gekennzeichnet, dass** die Teilbereiche Drähte sind, die in ein Polymermaterial der Zwischenschicht (12) eingebettet sind.

3. Verbundglasscheibe nach Anspruch 1 oder 2, **dadurch gekennzeichnet, dass** sie lokal opak ist und die leitfähigen Teilbereiche (8) sich zumindest überwiegend in dem opaken Bereich (6) der Scheibe (1) erstrecken.

4. Verbundglasscheibe nach einem der vorhergehenden Ansprüche, dass sie eine Kraftfahrzeug-Frontscheibe (1) ist und dass die Durchgangsöffnung (15) in einem oberen mittleren Bereich der Scheibe (1) angeordnet ist.

5. Verbundglasscheibe nach einem der vorhergehenden Ansprüche, **dadurch gekennzeichnet, dass** benachbart zu der Durchgangsöffnung (15) Kontaktfelder (16) an einer Außenseite der durchbrochenen Glasschicht (11) angeordnet und mit einem der Teilbereiche (18) über einen durch die Durchgangsöffnung (15) geführten Leiter (17) kontaktiert sind.

6. Verbundglasscheibe nach einem der vorhergehenden Ansprüche, **dadurch gekennzeichnet, dass** der Verbraucher eine Fahrgastraumbeleuchtung, ein elektrochromatischer Spiegel, ein Personendetektor oder ein Regensensor (18) ist.

7. Kraftfahrzeug, **dadurch gekennzeichnet, dass** es eine Verbundglasscheibe (1) nach einem der vorhergehenden Ansprüche aufweist.

8. Kraftfahrzeug nach Anspruch 7, **dadurch gekennzeichnet, dass** die Verbundglasscheibe (1) sich bis über die Sitzfläche eines Sitzes in der Fahrgastzelle des Kraftfahrzeugs erstreckt.

## Claims

1. A laminated glass pane (1) for a motor vehicle, comprising at least two glass layers (10, 11) and an intermediate layer (12) which is arranged between the glass layers and is electrically conductive at least in sections (8), with one of the glass layers comprising a pass-through opening (15) through which contact can be made with at least one of the sections (8), **characterized in that** a housing (9) of an electric consumer (18) which is supplied through the pass-through opening is attached in a manner covering the pass-through opening (15) to the glass layer (11) which is broken through.

2. A laminated glass pane according to claim 1, **characterized in that** the sections are wires which are embedded in a polymer material of the intermediate layer (12).

3. A laminated glass pane according to claim 1 or 2, **characterized in that** it is locally opaque and the conductive sections (8) extend at least predominantly in the opaque region (6) of the pane.

4. A laminated glass pane according to one of the preceding claims, in that it is a windscreen (1) of a motor vehicle and the pass-through opening (15) is arranged in an upper middle region of the pane (1).

5. A laminated glass pane according to one of the preceding claims, **characterized in that** adjacent to the pass-through opening (15) contact fields (16) are arranged on an outside of the glass layer (11) that is broken through, and contact is established with one of the sections (18) via a conductor (17) which is guided through the pass-through opening (15).

6. A laminated glass pane according to one of the preceding claims, **characterized in that** the consumer is interior automotive lighting, an electrochromatic mirror, a person detector or a rain sensor (18).

7. A motor vehicle, **characterized in that** it comprises a laminated glass pane (1) according to one of the preceding claims.

8. A motor vehicle according to claim 7, **characterized in that** the laminated glass pane (1) extends up to and over the seating surface of a seat in the passenger compartment of the motor vehicle.

## Revendications

1. Vitre en verre feuilleté (1) pour un véhicule à moteur avec au moins deux couches de verre (10,11) et une couche intercalaire (12) conductrice électrique au moins dans certaines zones (8) et disposée entre les couches de verre, dans laquelle l'une des couches de verre présente une ouverture traversante (15) à travers laquelle le contact peut être établi avec au moins une des zones (8), **caractérisée en ce qu'**un boîtier (9) d'un consommateur électrique (18) alimenté à travers l'ouverture traversante est posé sur la couche de verre présentant l'ouverture (11) de façon à recouvrir l'ouverture traversante (15).

2. Vitre en verre feuilleté selon la revendication 1, **caractérisée en ce que** les zones sont des fils métalliques inclus dans un matériau polymère de la couche intercalaire (12).

3. Vitre en verre feuilleté selon la revendication 1 ou 2, **caractérisée en ce qu'**elle est localement opaque et les zones conductrices (8) s'étendent au moins en majeure partie dans la zone opaque (6) de la vitre (1).

4. Vitre en verre feuilleté selon l'une des revendications précédentes, **caractérisée en ce qu'**il s'agit d'un pare-brise (1) de véhicule à moteur et **en ce que** l'ouverture traversante (15) est disposée dans une partie centrale supérieure de la vitre (1).

5. Vitre en verre feuilleté selon l'une des revendications précédentes, **caractérisée en ce que** des champs de contact (16) sont disposés à proximité de l'ouverture traversante (15) sur une face extérieure de la couche de verre présentant l'ouverture (11) et mis en contact avec l'une des zones (18) par un conducteur (17) passant à travers l'ouverture traversante (15).

6. Vitre en verre feuilleté selon l'une des revendications précédentes, **caractérisée en ce que** le consommateur est un éclairage d'habitacle, un rétroviseur électrochromique, un détecteur de personnes ou un détecteur de pluie (18).

7. Véhicule à moteur, **caractérisé en ce qu'**il présente une vitre en verre feuilleté (1) selon l'une des revendications précédentes.

8. Véhicule à moteur selon la revendication 7, **caractérisé en ce que** la vitre en verre feuilleté (1) s'étend au-dessus de la surface d'assise d'un siège dans l'habitacle du véhicule à moteur.
